# EUROPEAN PATENT APPLICATION

(11) **EP 3 701 907 A1**
(43) Date of publication of application: **02.09.2020**
(21) Application number: 18830296.2
(22) Date of filing: 26.10.2018
(51) Int. Cl.: A61C 8/02, A61C 8/00

(54) **DENTAL IMPLANT WITH ELECTROSTIMULATION SYSTEM AND ITS PRODUCTION METHOD**

(30) Priority: 26.10.2017 PT 2017110374
(71) Applicant: Universidade do Minho, 4704-553 Braga (PT)
(72) Inventor: CORREIA PEREIRA SILVA, Filipe Samuel, 4800-058 Guimarães (PT); NOVAIS CARVALHO, Óscar Samuel, 4800-058 Guimarães (PT); SALGADO PINTO, Paulo Filipe, 4800-058 Guimarães (PT); SOARES MADEIRA, Sara Cristina, 4800-058 Guimarães (PT)
(74) Representative: Patentree
(86) International application number: PCT/IB2018/058401
(87) International publication number: WO 2019/082158

(57) **Abstract**

The present disclosure relates to a dental implant with electro-stimulation system by electric circuit comprising a plurality of overlapped discs wherein each disc comprises in its interior and in its upper end and lower end surfaces channels and respective holes, wherein each channel comprises an electrically conductive material comprised in said electric circuit. The channels further comprise a film that acts as a barrier between the material of the discs and the material of the electric circuit. The implant further comprises a battery or piezoelectric sensor that allows the creation of electric fields. This disclosure has the main advantage of stimulating bone growth throughout the whole surface of the implant as well as promoting an antimicrobial action through the electric fields.

## Description

### Technical domain

The present disclosure is in the dental field, more specifically in the field of dental implants that, through electro-stimulation, promote the regeneration of bone tissues adjacent to the implant as well as having antibacterial properties.

### Background

There are several proposals for dental implants that have electrical stimuli whose purpose is to aid the regeneration of bone tissues adjacent to the implant. Most of the proposals, including the following examples of patents US8,374,697, CN103006343 and WO2006043748, propose an implant wherein the electrodes are mounted on the upper part and lower part of the implant, respectively, both being mounted on the main body of the implant. The electrode that acts on the lower part of the implant passes through the interior of the implant body. The implant described in these documents allows the creation of an electric field (and electro-magnetic) between these two poles.

Another approach, presented in patent document US2003/0153965, proposes the use of composite materials of polymer and/or ceramic matrix, together with electrically conductive reinforcements, for example carbon nanotubes, in order to be used to transmit electric current along two poles of the implant. In turn, patent document US5738521 proposes the placement of the two electrical poles, one of them in the implant and the other in an area of the bone, outside the implant, in order to create an electric field between these two points.

In all the solutions presented there are always and only two poles, mounted at different points of the implant, usually at opposite points of the implant, or even one of the poles is placed outside the implant, between which an electric field is created. This electric field will generate electric currents between the two poles and thus stimulates the bone growth in the zones of passage of current, through the tissues of the mandible and/or maxilla. The electric current will flow randomly between the two poles, through the zones of lower electrical resistance of the bone tissues.

These facts are described in order to illustrate the technical problem addressed by the present disclosure.

### General Description

The present disclosure relates to a dental implant constituted base on titanium, its alloys or titanium composites, biocompatible and possibly bioactive and/or antibacterial, and which internally contains an electric circuit which allows electric and electromagnetic fields to reach multiple points of the surface of the implant, this electric circuit being an integral part of the body of the implant. This circuit is preferably fed by a small battery which is housed at the top of the implant, along with a chip that coordinates the electrical stimuli, or alternatively, by a piezoelectric component that is actuated by the mastication force. The piezoelectric component shall preferably consist of a biocompatible material, for example Barium Titanate (BaTiO3), or 'niobate perovskite' compounds, ((K, Na)NbO3), named KNN, and which generates an electric field when subject to a deformation due to a load such as that of mastication. The material of the electric circuit is preferably Platinum or Rhodium or Palladium or Silver or Gold, or other biocompatible and electrically conductive material.

The present disclosure relates to a device (dental implant) where multiple electric fields are created, located at multiple points of the surface of the implant, strategically defined, with the electric wire circuit being an integrant part of the implant body. The method of obtaining the implant will also be presented. This solution presents itself as more efficient than existing solutions because it gives rise to multiple stimuli located throughout the entire implant surface, which will be a single body, without the need for several components in the main body of the implant.

Specifically, the implant comprises a set of overlapping discs between each other, wherein each disc comprises on its surfaces (upper and lower face) vertical, horizontal and radial channels for the placement of the electric wires (or electric powders). Each disc typically has 4 holes on the side part thereof that allow the electric fields to contact the bone or gingiva.

When the discs overlap, these holes will be oriented such as to create multiple electric fields along the surface of the implant. The channels of one face of the discs should preferably contain one polarity, for example the positive one, while the channels of the other face contain the reverse polarity, for example the negative one. When the discs overlap, the implant preferably will have, over its height and alternately, positive polarity and negative polarity.

The process for obtaining the component is based on the following approach. Machining of discs of titanium, its alloys or composites, which will constitute portions or round slices of the final implant. Once the shape of each disc is obtained, channels are created in the discs that will serve for insertion of electric wires or powders, being preferably used wires. These channels should be adequately insulated with an oxide film, which creates an electrical insulation of the wires relative to the discs. These disc channels, after being electrically insulated, will be filled with wires or powders of an electrically conductive metal, for example platinum, rhodium, palladium, gold, or silver or other biocompatible and electrically conductive material. After incorporating the wires or powders into the channels, the discs will be mounted (overlapped) in series and subjected to a consolidation under pressure and temperature, in order to connect to each other by sintering, giving rise to the main body of the implant.

Once the implant is obtained, there will be mounted on the top of this (either in the abutment or in the crown) and connected to the implant's electric circuit, an electronic element - such as a battery and a control unit, or a piezoelectric component - that generates the electrical energy needed to create the electric fields at multiple points of the surface of the implant.

This solution presents several innovations and advantages, namely:
A first major advantage of the implant proposed in this document is the existence of multiple electric fields created on the surface of the implant, due to the existence of multiple positive and negative electrodes over the surface thereof. In this way, instead of a single electric field, multiple electric fields are created dispersed on the surface of the implant thus rendering the stimulus for bone regeneration and/or antibacterial action much more efficient and controlled. Rather than a single electric field created around the implant, which will give rise to a flow of current through the tissues, in a random and poorly controlled manner, thus being effective where the current flows but little effective where the current does not pass, and even being excessive if the whole current flows through a small volume or by default if the current flows through a large volume, the new solution presented allows the creation of current flows along the entire surface of the implant, making the process much more controlled, and, therefore, making the process of bone regeneration and antibacterial action, through electrical and/or magnetic stimuli much more effective, ensuring its effect in a much more controlled manner and over the entire surface of the implant.
A second major advantage of the proposed implant is that the wiring circuit of the implant is an integral part of the implant body. In the present proposal, and contrary to the existing patent documents where the electrical poles are mounted on the implant thus constituting additional components of the implant, in this proposal the electric circuit is an integral part of the implant body.
A third major advantage of this solution is that it can work being actuated by a battery or even by mastication forces. In an initial phase, where, intentionally there may be no mastication loads, the electrical stimuli will be promoted by a control unit that will control the frequency, actuation periods, and electric potentials, and by a battery, which will provide the electric power. In a second stage, where mastication forces already exist, this control unit and battery are replaced by a piezoelectric device that will create the electric fields when actuated by mastication forces. This advantage allows, contrarily to the existing patent documents, that this solution acts during the secondary stability period, that is, in the first months after placement of the implant, with the aid of a battery, as well as throughout the entire life of the implant, with the aid of a piezoelectric element. This solution allows to mimic the piezoelectric effect of the collagen contained in the bone making this implant solution closer to the natural functioning of the bone itself.

In one embodiment of the present disclosure the dental implant with electro-stimulation by electric circuit may comprise:
a plurality of overlapping discs in which each disc comprises in its interior and at its lower end and upper end surfaces, channels and respective orifices, wherein
each channel comprises an electrically conductive material comprised in said electric circuit.

In one alternative embodiment, the dental implant with electro-stimulation system by electric circuit, comprises:
a plurality of overlapping discs in which each disc comprises in its interior - and
at its lower end or upper end surfaces - channels and respective external orifices,
wherein each channel comprises an electrically conductive material comprised in said electric circuit.

An embodiment of the dental implant wherein each channel contains an insulating film and electric wires or powders that constitute said electric circuit.

In one embodiment, each disc comprises on the side part a plurality of holes for contacting said electric circuit, said holes are connected to the channels of the lower end and upper end surface of each disc.

In one embodiment, the channels of the upper end surface of each disc comprise a circular channel and one or more radial channels connected to said circular channel.

In one embodiment, the channels of the lower end surface of each disc comprise a circular channel and one or more radial channels may be connected to said circular channel.

In one embodiment, said radial channels may be connected to the orifices on the side part of each disc.

In one embodiment of the dental implant for electro-stimulation by two electrical polarities, the channels of the upper end surface of each disc and the channels of the lower end surface of each disc may be configured to be connected to reverse polarities.

In one embodiment, said discs are overlapped with the upper end surface and the lower end surface alternated with discs with the upper end surface and the lower end surface inverted with each other.

In one embodiment, each disc may comprise at each upper end and lower end surface a circular channel, wherein the radius of the channel of the lower end surface is smaller than the radius of the channel of the upper end surface.

In one embodiment, the internal channel or channels of each disc are between the upper end surface and the lower end surface.

In one embodiment, each disc comprises two internal channels, each of which between the upper end surface and the lower end surface, wherein each channel is connected to one and only one of the circular channels of the upper end and lower end surface.

In one embodiment, each disc typically comprises 4 holes to the exterior of said disc.

In one embodiment, the insulating film inserted into the channels is titanium oxide.

In one embodiment, the electric wires or powders may be of conductive metallic material.

In one embodiment, the metallic material may be, preferably, platinum or rhodium or palladium or gold or silver.

In one embodiment, each disc may comprise a thickness between 1 mm and 4 mm.

In one embodiment, the number of discs depends on the size of the implant intended and on the thickness of said discs.

In one embodiment, the disc material is based on titanium, its alloys or composites.

In one embodiment, the discs are configured to be overlapped and connected by sintering.

In one embodiment, the electric circuit is located at the top of the implant, in the crown or in the abutment.

In one embodiment, the electric circuit comprises a battery and respective control or a piezoresistive element.

In one embodiment, multiple electric fields are emitted on the surface of the implant from 5 to 100 mv.

In one embodiment, the method of obtaining the dental implant may comprise the following steps:
- machining by mechanical subtraction or laser ablation the holes and channels of each disc;
- generating in said channels the insulating film which is obtained by heating by laser or other oxidation processes or by chemical route;
- placing the electric wires or powders and sintering them or melting them by laser, or by pressure and temperature;
- overlapping each disc and sintering them at a pressure of 5 and 200MPa, preferably between 50 and 100 MPa and temperature between 800 and 1400 ° C, for periods between 2 and 60 minutes under controlled atmosphere;
- performing a polishing or surface treatment by particle blasting or laser or acid etching, in order to create the desired surface texture.

In one embodiment, the pressure may preferably be comprised between 50 to 100 MPa.

In one embodiment, the preferred temperature may be comprised between 1000° C and 1100 ° C.

### Brief description of the drawings

For an easier understanding, the following figures are attached, which represent preferred embodiments which are not intended to limit the object of the present description.
**Figure 1** - illustration of an embodiment of a disc of the implant with the holes constituting the internal electric circuit, with the positive circuit on one face and the negative circuit on the other face, and the horizontal and radial channels and the vertical channels.
**Figure 2** - schematic illustration of an example of a disc of the implant with the holes and channels where the internal electric circuit will be inserted with the respective protective electrical barrier or electrical insulation.
**Figure 3** - schematic illustration of an example of a mould, of a disc of the implant with the electric circuit impregnated in the channels shown in figure 1, in the form of powder or wire.
**Figure 4** - schematic illustration of an embodiment of the disc assembly which constitute the main body of the implant, with the internal electric circuit already impregnated in the channels.
**Figure 5** - schematic presentation of an embodiment of the process of sintering, under pressure and temperature, of the discs constituting the main body of the implant, with the internal electric circuit impregnated, where the discs are overlapped, inside of a mould, for example of graphite, and subjected to pressure and temperature.
**Figure 6** - illustration of an embodiment of the final implant, already consolidated by sintering and already with external thread, with the internal electric circuit already incorporated.
**Figure 7** - shows an embodiment of the implant with the control unit and battery, or piezoelectric element, already mounted on the top of the implant, either abutment or crown, and the electric fields generated along the surface of the implant.

### Detailed Description

The present disclosure includes a dental implant, which is composed of a metal or metal composite, biocompatible, which contains in its interior an electric circuit intended for bringing electric fields to multiple points of the surface of the implant. The positive and negative electrical poles lie in pairs along the surface of the implant 15 (Figure 7), in order to create multiple micro electric fields. This circuit is fed by a small battery that is housed at the top of the implant 13 (Figure 7), in the abutment or in the crown, and provides power to the electrical system, together with a chip 13 that coordinates electrical stimuli such as voltage intensity, actuation periods, frequency, among others, or alternatively the system is fed by a piezoelectric component 13, which is actuated by the force of mastication.

The implant material is preferably of titanium or its alloys, or composites based on titanium.

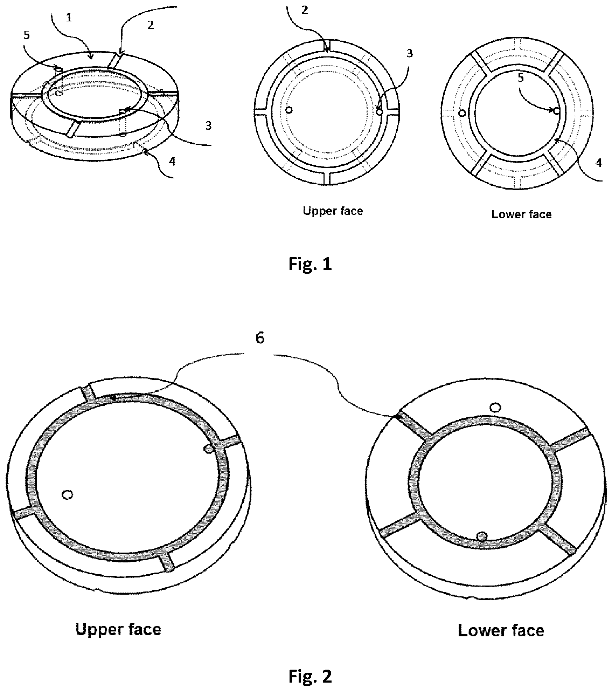

The implant comprises small discs 1 (Figure 1), with thicknesses that may range between 1 mm and 4 mm, each disc. In what concerns the process, in these discs, which are in the form of cylinders 1, holes and vertical channels 3, 5 and horizontal and radial channels 2, 4, where the electric circuit of the implant will be inserted are machined by mechanical subtraction or by laser ablation, among others. These channels should be coated with an insulating film 6 that promotes an electrical barrier between the material of the disc, preferably titanium and the material of the electric circuit, platinum or rhodium or gold or silver, among others. This barrier is important because it avoids the dispersion of electric current throughout the implant randomly. Thus, this film is formed by titanium oxides, which can be obtained by laser heating, among other oxidation processes, or by chemical route. The film may have from tens of nanometers to tens of micrometers depending on the process and duration of the same.

After obtaining the film 6, the electric circuit is placed, that is, the radial, horizontal and vertical channels are filled by a metallic material 7, such as platinum or rhodium or palladium or gold or silver, among other biocompatible and electrically conductive metals. The filling can be made with wires or powders from the previous materials and these are sintered or melt, by laser or by other heat source thus filling the channels 7.

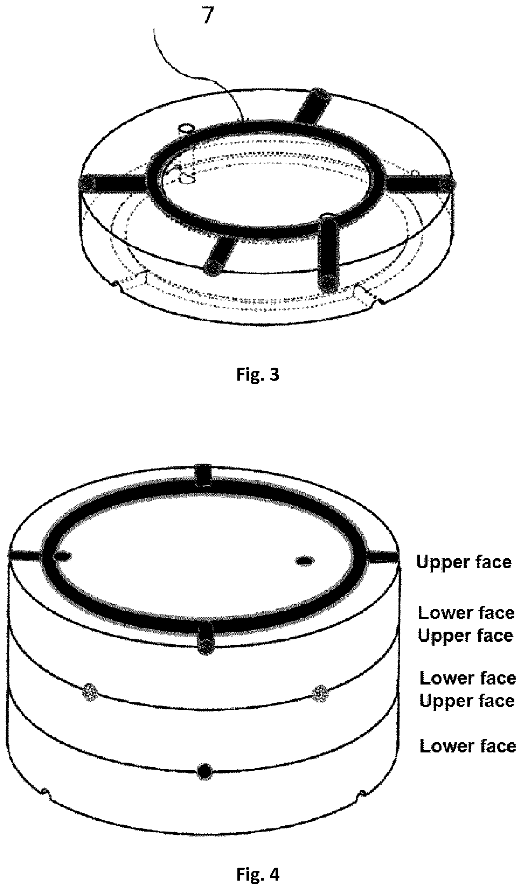

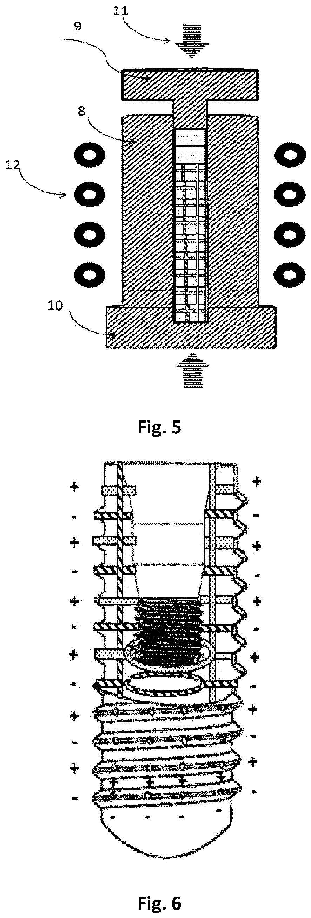

These discs are then mounted (overlapped) (Figure 4), so as to give rise to the almost final shape of the implant (Figure 5), and are placed within a mould consisting of a main body 8, an upper part 9, and a lower part 10, of a material such as graphite, or other refractory material, and subjected to sintering under pressure 11 (Figure 5) between 5 and 200MPa, preferably between 50 and 100 MPa and temperature 12 between 800 and 1400 ° C, preferably between 1000 and 1100 ° C for periods between 2 to 60 minutes under controlled atmosphere, for example Argon, for consolidation of the discs with each other, and of the materials constituting the internal electrical system of the implant.

After consolidation of the main body of the implant, it now has a geometry close to the final one (Figure 6), and can be subject to machining to definition of the final geometry or the thread. It can also be subject to a polishing, or to a surface treatment by particle blasting, acid etching, laser, among others, intended to create a surface texture suitable for a good connection to the bone tissues.

The abutment 14 should be mounted on the implant, on which the signal processing central and the battery 13, or alternatively the piezoelectric component 13 may be mounted, which will produce the electrical energy needed to create the electric fields at the multiple points of the surface of the implant 15. The electric fields in the surface of the implant may be in the range of 5 to 100 mv.

### Bibliographic Refs.:

[1] US 8,374,697 B2 - Electrical dental screw implant
[2] CN 103006343 B - Dental implant micro-electrical stimulation healing device
[3] WO 2006043748 A1 - Apparatus for accelerating osseointegration
[4] US 2003/0153965 A1 - Electrically conducting nanocomposite materials for biomedical applications
[5] US 5738521 A - Method for accelerating osseointegration of metal bone implants using electrical stimulation.

In one embodiment the dental implant with electro-stimulation system may be characterized in that it comprises in its constitution discs comprising in its interior and at its lower and upper surfaces, channels 2, 4 and respective holes, wherein each channel contains an insulating film 6 and electric wires or powders 7 which constitute the electric circuit; and an electronic element 13.

In one embodiment the dental implant may be characterized in that the channels of each disc are radial and horizontal 2, 4 and vertical 3, 5.

In one embodiment the dental implant may be characterized in that each disc typically comprises 4 holes to the exterior of the implant.

In one embodiment the dental implant may be characterized in that the insulating film inserted in the channels is of titanium oxide.

In one embodiment the dental implant may be characterized in that the electric wires or powders are of electrically conductive metallic material.

In one embodiment the dental implant may be characterized in that the metallic material is preferably platinum or rhodium or palladium or gold or silver.

In one embodiment the dental implant may be characterized in that each disc comprises a thickness between 1 mm and 4 mm.

In one embodiment the dental implant may be characterized in that the number of discs is dependent on the size of the implant intended and on the thickness of the discs.

In one embodiment the dental implant may be characterized in that the material of the discs is based on titanium, its alloys or composites.

In one embodiment the dental implant may be characterized in that the discs are overlapped and connected by sintering.

In one embodiment the dental implant may be characterized in that the electronic element is located at the top of the implant, in the crown or in the abutment.

In one embodiment the dental implant may be characterized in that the electronic element consists of a battery and respective control or of a piezoresistive element.

In one embodiment the dental implant may be characterized in that it emits, on the surface of the implant, multiple electric fields from 5 to 100 mv.

In one embodiment, the method of obtaining the implant may be characterized in that it comprises the following steps:
- machining by mechanical subtraction or laser ablation the holes and channels of each disc;
- generating in said channels the insulating film which is obtained by heating by laser or other oxidation processes or by chemical route;
- placing the electric wires or powders and sintering them or melting them by laser, or by pressure and temperature;
- overlapping each disc and sintering them at a pressure of 5 to 200MPa, preferably between 50 and 100 MPa and temperature between 800 and 1400 ° C, for periods between 2 and 60 minutes under controlled atmosphere;
- performing a polishing or surface treatment by particle blasting or by laser or acid etching, in order to create the desired surface texture.

In one embodiment the method may be characterized in that the pressure is preferably comprised between 50 and 100 MPa.

In one embodiment the method may be characterized in that the preferred temperature is between 1000 ° C and 1100 ° C.

The term "comprises" or "comprising" when used in this document is intended to indicate the presence of the characteristics, elements, integers, steps and components mentioned, but does not prevent the presence or addition of one or more other features, elements, integers, steps and components, or groups of the same.

The present disclosure is not, of course, in any way restricted to the embodiments described in this document and a person of ordinary skill in the art may foresee many possibilities of modifying it and replacing of technical characteristics by equivalent ones, depending on the requirements of each situation, as defined in the appended claims. The following claims further define preferred embodiments.

## Claims

1. Dental implant with electric circuit electro-stimulation system, which comprises:
a plurality of overlapping discs wherein each disc comprises in its interior and in its lower end and upper end surfaces channels and respective external holes, wherein each channel comprises an electrically conductive material comprised in said electric circuit.

2. Dental implant according to the preceding claim, wherein each channel contains an insulating film and electric wires or powders constituting said electric circuit.

3. Dental implant according to any one of the preceding claims, wherein each disc comprises on the side part a plurality of holes for contacting said electric circuit, said holes being connected to the channels of the lower end and upper end surfaces of each disc.

4. Dental implant according to any one of the preceding claims, wherein the upper end surface channels of each disc comprise a circular channel and one or more radial channels connected to said circular channel.

5. Dental implant according to any one of the preceding claims, wherein the lower end surface channels of each disc comprise a circular channel and one or more radial channels connected to said circular channel.

6. Dental implant according to claims 4 or 5, wherein said radial channels are connected to holes on the side part of each disc.

7. Dental implant for electro-stimulation by two electrical polarities according to any one of the preceding claims, wherein the channels of the upper end surface of each disc and the channels of the lower end surface of each disc are arranged to be connected to reverse polarities.

8. Dental implant according to the preceding claim, wherein said discs are overlapped with the upper end surface and the lower end surface alternated with discs with the upper end surface and lower end surface reversed with each other.

9. Dental implant according to the preceding claim, wherein each disc comprises in each upper end and lower end surface a circular channel, wherein the radius of the channel of the lower end surface is smaller than the radius of the channel of the upper end surface.

10. Dental implant according to any one of the preceding claims, wherein the channel or internal channels of each disc are between the upper end surface and the lower end surface.

11. Dental implant according to any one of claims 10 and 11, wherein each disc comprises two internal channels, each between the upper end surface and the lower end surface, wherein each internal channel is connected to one, and only one, of the circular channels of the upper end and lower end surface.

12. Dental implant according to any one of the preceding claims, wherein each disc comprises 4 holes to the exterior of said disc.

13. Dental implant according to any one of the preceding claims, wherein the insulating film inserted into the channels is titanium oxide.

14. Dental implant according to any one of the preceding claims, wherein the electric wires or powders are of conductive metallic material.

15. Dental implant according to any one of the preceding claims, wherein the metallic material is platinum, rhodium, palladium, gold, silver, or combinations thereof.

16. Dental implant according to any one of the preceding claims, wherein each disc has a thickness between 1 mm and 4 mm.

17. Dental implant according to any one of the preceding claims, wherein the number of discs is predefined according to the size of the implant intended and the thickness of said discs.

18. Dental implant according to any one of the preceding claims, wherein the disc material is based on titanium, its alloys or composites.

19. Dental implant according to any one of the preceding claims, wherein the discs are configured to be overlapped and connected by sintering.

20. Dental implant according to any one of the preceding claims, wherein the electric circuit is located at the top of the implant, in the crown or in the abutment.

21. Dental implant according to any one of the preceding claims which comprises an electronic element, a battery, a respective battery control, a piezoresistive element, or combinations thereof.

22. Dental implant according to any one of the preceding claims arranged so that multiple electric fields are emitted on the surface of the implant from 5 to 100 mv.

23. Method of obtaining the dental implant of any one of claims 1 to 22, comprising the following steps:
machining by mechanical subtraction or laser ablation the holes and channels of each disc;
generating in said channels the insulating film which is obtained by laser heating or by other oxidation processes or by chemical route;
placing the electric wires or powders and sintering them or melting them by laser, or by pressure and temperature;
overlapping each disc and sintering them at a pressure of 5 and 200MPa, preferably between 50 and 100 MPa and temperature between 800 and 1400 ° C, for periods between 2 to 60 minutes under controlled atmosphere;
performing a polishing or surface treatment by particle blasting or by laser or acid etching, in order to create the desired surface texture.

24. Method according to the preceding claim, wherein the pressure is comprised between 50 and 100 MPa.

25. Method according to any one of claims 23-24, wherein the temperature is comprised between 1000 ° C and 1100 ° C.
